# FASCICULE DE BREVET EUROPEEN

(11) **EP 2 471 714 B1**
(45) Date de publication et mention de la délivrance du brevet: **28.01.2015**
(21) Numéro de dépôt: 11192099.7
(22) Date de dépôt: 06.12.2011
(51) Int. Cl.: B64G 1/22, B64G 1/44

(54) **Générateur solaire plan deroulable**
Abrollbarer ebener Solargenerator
Extendable planar solar generator

(30) Priorité: 30.12.2010 FR 1005184
(43) Date de publication de la demande: 04.07.2012
(73) Titulaire: Thales, 92200 Neuilly Sur Seine (FR)
(72) Inventeur: Blanchard, Laurent, 06370 Mouans-Sartoux (FR); Ducarne, Julien, 06400 Cannes (FR); Geyer, Freddy, 06210 Mandelieu (FR); Baudasse, Yannick, 06130 Grasse (FR)
(74) Mandataire: Esselin, Sophie

(56) Documents cités:
- DE-A1- 1 956 052
- US-A1- 2007 262 204
- SCHULTZ M R ET AL: "Neutrally stable behavior in fiber-reinforced composite tape springs", COMPOSITES PART A: APPLIED SCIENCE AND MANUFACTURING, ELSEVIER SCIENCE PUBLISHERS B.V., AMSTERDAM, NL, vol. 39, no. 6, 1 juin 2008 (2008-06-01), pages 1012-1017, XP022684327, ISSN: 1359-835X, DOI: DOI:10.1016/J.COMPOSITESA.2008.03.004 [extrait le 2008-03-26]

## Description

Le domaine de l'invention est celui des structures déployables dans l'espace pouvant avantageusement être utilisées pour le déploiement de générateurs solaires.

Les mètre-rubans - tape-spring en anglais - sont connus en tant que tels dans le domaine spatial comme étant des rubans aptes à passer de l'état enroulé à l'état déroulé essentiellement grâce à leur énergie élastique propre ; à l'état déroulé, les mètre-rubans connus présentent généralement une rigidité apte à les maintenir dans cet état, cf. US 2007/0262204.

Les mètre-rubans classiques, généralement métalliques, ont donc une tendance naturelle à se déplier pour se retrouver dans leur état stable. Si on les force à se replier, ils ont tendance à le faire sur un rayon égal à celui de leur rayon de courbure transversale. Il faut donc un effort extérieur faible pour les maintenir enroulés sous cette forme. Si cet effort est brutalement supprimé, le dépliement peut être violent et incontrôlé, c'est-à-dire que tout le mètre-ruban peut avoir tendance à se remettre droit simultanément, sur toute sa longueur. Les mètre-rubans classiques peuvent ainsi présenter des difficultés en termes de contrôle de leur dépliement.

Des mètre-rubans classiques en composite ont par ailleurs été mis au point. Ces derniers ont des propriétés similaires pour l'essentiel à celles des mètre-rubans classiques métallique, mais présentent l'avantage de rendre possible, dans une certaine mesure, le contrôle de leur rayon d'enroulement propre. Ils offrent également l'avantage d'un rapport rigidité / masse élevé ainsi que d'un faible coefficient de dilatation.

La demanderesse a déjà démontré que l'on peut associer un mètre-ruban classique à une couche de matériau thermoplastique.. Cette invention a fait l'objet de la demande de brevet FR 0803986. Le mètre ruban classique comprenant une couche de matériau thermoplastique peut être enroulé en force, chauffé puis refroidi de telle sorte que le thermoplastique fige le mètre-ruban dans l'état enroulé, qui devient alors l'état stable. En chauffant localement, il est possible de dérouler progressivement l'ensemble. Alternativement, il est possible d'utiliser à la place du matériau thermoplastique un matériau thermodurcissable ou plus généralement un matériau présentant une forte variation de rigidité lors du franchissement d'un seuil de température.

Enfin, par construction, il est possible de rendre un mètre-ruban composite bi-stable. Des études ont été publiées sur cette question, comme notamment « Carbon Fibre Reinforced Plastic Tape Springs », J.C.H. Yee et AI., AIAA 2004-1819, et « Analytical models for bistable cylindrical shells », S.D. Guest et AI.

La propriété remarquable des mètre-rubans bi-stables réside dans le fait qu'ils sont mécaniquement stables à la fois à l'état déroulé et à l'état enroulé. L'état le plus stable reste cependant l'état déroulé. Les mètre-rubans bi-stables sont enroulés par l'intermédiaire d'un effort généralement important. Ils restent stables à l'état enroulés autour de leur rayon de courbure naturel, sans effort extérieur. Il suffit d'en déplier une extrémité, avec un effort de faible intensité, exercé par un système de motorisation par exemple, pour déclencher le déroulement. Le déroulement peut être très rapide, mais reste progressif à partir du point de déroulement initial.

La problématique générale à laquelle a trait l'invention réside dans le déploiement de générateurs solaires de grande dimension et au problème d'encombrement sous la coiffe des lanceurs qui en découle.

Il existe de nombreuses possibilités technologiques pour déployer de vastes générateurs solaires dans l'espace, telles que celles décrites dans les brevets US 6555740, où la structure portante et la membrane supportant les cellules photovoltaïques de générateurs solaires sont déployés séparément, ou le brevet US 6543725, où la structure portante est pliée (et non enroulée).

La présente invention constitue une alternative technologique à ces solutions connues, présentant l'avantage d'être moins encombrante, et de rendre possible un contrôle plus fin du déploiement de générateurs solaires de grande dimension.

L'état de la technique comprend par ailleurs un dispositif pour le déploiement de panneaux stockés en accordéon et déployables à l'aide d'un tube composite polymérisé et gonflable. Cependant, ce type de dispositif n'est utilisable qu'une seule fois, car la polymérisation est irréversible. Ceci pose un problème pour démontrer et valider le déploiement complet au sol avant d'être envoyé dans l'espace.

Un but de l'invention est notamment de pallier les inconvénients précités. Pour assurer le déploiement de générateurs solaires de grande dimension, elle propose l'utilisation d'une structure comprenant des mètre-rubans en parallèle, sur lesquels est fixée une membrane souple, semi-rigide, ou composée d'éléments souples et rigides tels que de fines lattes planes reliées de manière flexibles entre elles, ladite membrane ayant une face sur laquelle sont agencées une pluralité d'éléments aptes à transformer l'énergie solaire en énergie électrique.

Plus précisément, l'invention a pour objet un dispositif de déploiement de générateur solaire comprenant un ensemble comprenant une pluralité de mètre-rubans supportant une membrane enroulable sur une face de laquelle est agencée une pluralité d'éléments aptes à transformer l'énergie solaire en énergie électrique, à l'état enroulé lesdits mètre-rubans et ladite membrane étant co-enroulés autour d'un rayon de courbure unique égal au rayon de courbure de pliage du mètre-ruban et en ce que lesdits mètres rubans sont sensiblement parallèles et reliés entre eux par des lattes transversales assurant la rigidité de la structure porteuse.

Ledit ensemble comprend :
- au moins un mètre-ruban principal ayant pour fonction le maintien de la membrane en position enroulée avant le déploiement et la régulation du déploiement,
- au moins un mètre-ruban secondaire, en métal ou en matériau composite, ayant pour fonction la motorisation du déploiement de la membrane du fait de leur tendance naturelle à se déplier.

L'au moins un mètre-ruban principal (1) associe un matériau composite et une couche d'un matériau présentant une variation de rigidité lors du franchissement d'un seuil de température.

Avantageusement, l'au moins un mètre-ruban principal associe un matériau composite et une couche thermoplastique, thermiques.

Avantageusement l'au moins un mètre-ruban principal est de type bistable et comprend en outre une couche d'un matériau présentant une forte variation de rigidité lors du franchissement d'un seuil de température et en ce que les moyens d'actionnements sont thermiques. Avantageusement, ledit ensemble et la membrane peuvent être co-enroulés autour d'un mandrin de rayon préférentiellement supérieur ou égal au rayon de courbure naturel dudit mètre-ruban.

Avantageusement, ladite membrane peut être souple.

Avantageusement, ladite membrane peut être composée d'éléments souples et rigides.

Avantageusement, lesdits éléments souples et rigides consistent en de fines lattes planes liées entre elles de manière flexible.

Avantageusement, lesdits éléments aptes à transformer l'énergie solaire et énergie électrique peuvent être des cellules photovoltaïques souples.

Avantageusement, les cellules photovoltaïques souples sont en AsGa.

Avantageusement, ledit au moins mètre-ruban présente une face bombée et en ce qu'il est enroulé indifféremment avec la face bombée vers l'extérieur ou la face bombée vers l'intérieur.

D'autres caractéristiques et avantages de l'invention apparaîtront à l'aide de la description qui suit faite en regard des dessins annexés qui représentent :
- la figure 1 : un générateur solaire rigide en configuration stockée sous coiffe d'un lanceur et en configuration déployé, selon l'art connu ;
- la figure 2 : un exemple de dispositif selon l'invention, comprenant des générateurs solaires à une membrane revêtue de cellules photovoltaïques, en cours de déploiement ;
- la figure 3 : le même exemple de dispositif selon l'invention, mais à double membranes et en configuration déployée ;
- la figure 4 : des exemples de configuration sous coiffe de dispositifs selon l'invention, en fonction de différents modes de réalisation.

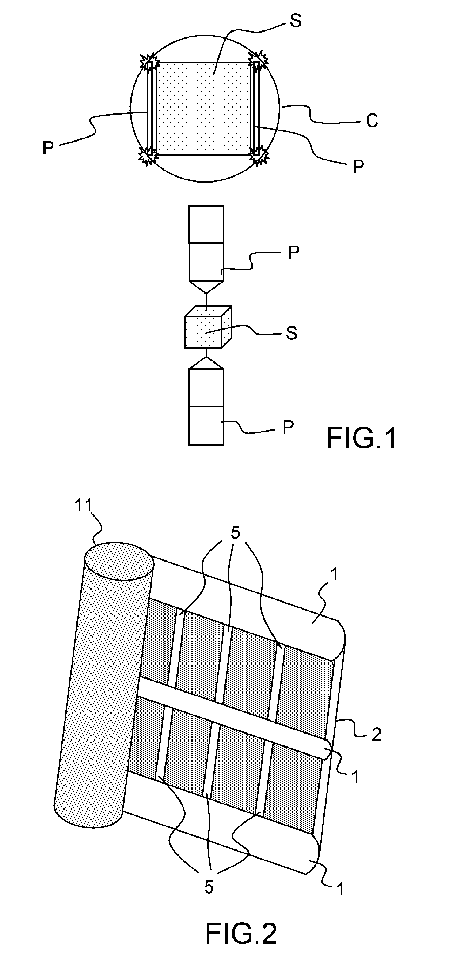

La figure 1 présente un exemple de dispositif de panneaux solaires P rigides connus, destinés à être déployés de part et d'autre de la caisse d'un engin spatial S, en configuration stocké sous la coiffe C d'un lanceur et en configuration déployée. Comme évoqué précédemment, les panneaux solaires rigides P présentent sous coiffe C un encombrement important et non optimisé par rapport au volume alloué sous la coiffe C.

La figure 2 présente un schéma d'un exemple de dispositif selon l'invention. Ce dernier comprend une membrane souple 2, supportant une pluralité de cellules photovoltaïques, une pluralité de mètre-rubans 1 constituant une structure portante. Alternativement, ladite membrane 2 peut être semi-rigide, ou être constituée d'éléments souples et rigides tels que de fines lattes planes reliées de manière flexibles entres elles.

A l'état enroulé, les mètre-rubans 1 sont de préférence enroulés autour de leur rayon de courbure naturel. Un mandrin 11 peut être présent, essentiellement pour assurer une fonction de support d'enroulement pour la membrane souple 2.

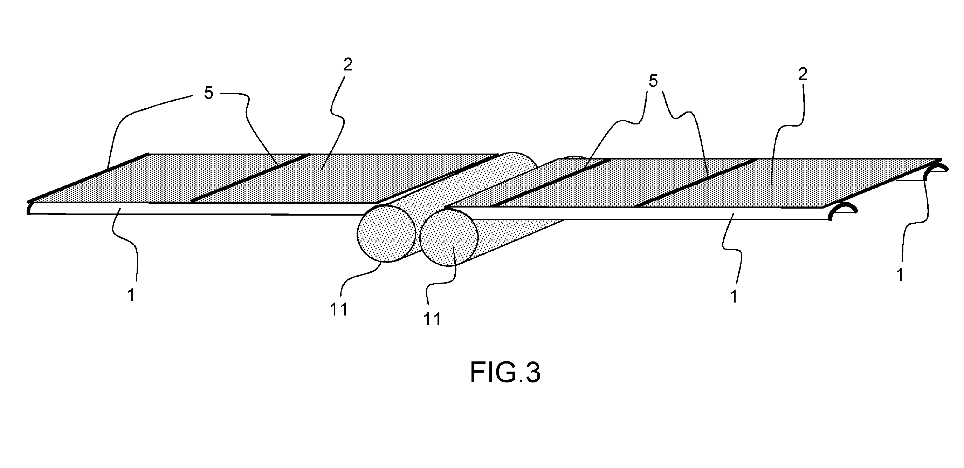

Dans le mode de réalisation représenté sur les figures 2 et 3, deux mètre-rubans 1 supportent la membrane souple 2. Lesdits mètre-rubans 1, sont reliés par des lattes transversales 5 afin d'assurer la rigidité de la structure porteuse de la membrane souple 2. Les mètre-rubans 1 peuvent êtres positionnés dans différentes configurations en fonction du besoin en raideur en configuration déployée. Les mètre-rubans 1 sont préférentiellement enroulés avec leur face bombée vers l'extérieur, comme représenté dans la figure 2, mais il est également possible d'avoir un enroulement avec face bombée vers l'intérieur. C'est notamment la pratique habituelle pour certains mètre-rubans bistables.

Comme représenté à la figure 3, dans un stade de déploiement plus avancé, le dispositif selon l'invention peut comporter deux structures similaires, enroulables, dont les mandrins d'enroulement 11 sont sensiblement parallèles. Avantageusement, les deux structures peuvent êtres déployées simultanément par l'intermédiaire d'un système de rotation des mandrins 11 éventuellement combiné à un système de réchauffage des mètres à rubans 1. En configuration déployée, les deux membranes peuvent être montées sur le mandrin tangentiellement ou radialement, de manière à être positionné sur des plans uniques ou parallèles.

Dans le mode de réalisation préférée de l'invention, pour la membrane souple 2, la structure portante constituée d'une pluralité de mètre-rubans 1 comprend en fait au moins un mètre-ruban principal et au moins un mètre-ruban secondaire classique, en métal ou en matériau composite, les mètre-rubans secondaires ayant pour fonction la motorisation du déploiement des membranes du fait de leur tendance naturelle à se déplier et les mètre-rubans principaux ayant pour fonctions le maintien des membranes en position enroulée avant le déploiement et la régulation du déploiement au moyen d'actionnements. Ces systèmes de déploiement peuvent êtres couplés à un système permettant la rotation du mandrin 11 en même temps que s'effectue le déploiement de la ou des membranes 2.

L'au moins un mètre ruban principal associe un matériau composite et une couche d'un matériau présentant une forte variation de rigidité lors du franchissement d'un seuil de température, par exemple un matériau thermoplastique, et les moyens d'actionnement sont thermiques.

Alternativement, l'au moins un mètre ruban principal peut être de type bistable et comprendre une couche de matériau présentant une forte variation de rigidité lors du franchissement d'un seuil de température, les moyens d'actionnement étant thermiques.

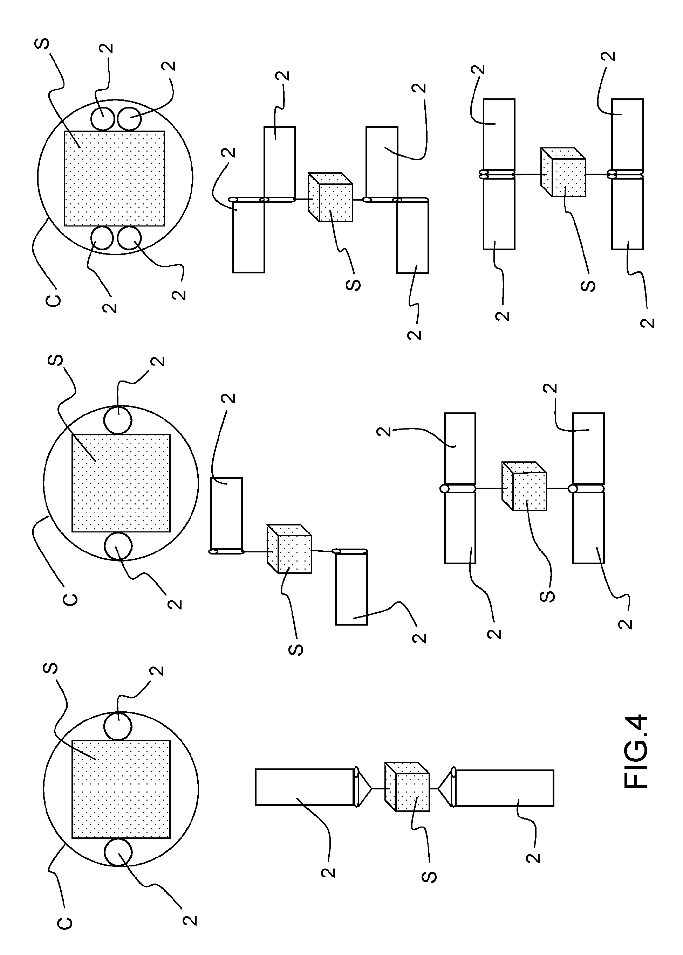

La figure 4 illustre différentes configurations sous coiffe et déployés de dispositifs de déploiement de générateurs solaires selon l'invention. En position stockée, comme le montrent les schémas de la figure 4, l'état enroulé des membranes 2 supportées par une structure portante de mètre-rubans est peu encombrant.

En résumé, l'invention a pour principal avantage de proposer une solution pour le déploiement de générateurs solaires de grande dimension, à l'aide d'un mécanisme simple et surtout compact.

## Revendications

1. Dispositif de déploiement de générateur solaire comprenant :
- un ensemble comprenant une pluralité de mètre-rubans (1) supportant une membrane (2) enroulable sur une face de laquelle est agencée une pluralité d'éléments aptes à transformer l'énergie solaire en énergie électrique, et
- à l'état enroulé lesdits mètre-rubans (1) et ladite membrane (2) sont co-enroulés autour d'un rayon de courbure unique égal au rayon de courbure de pliage du mètre-ruban (1),
- lesdits mètres rubans étant sensiblement parallèles et reliés entre eux par des lattes transversales (5) assurant la rigidité de la structure porteuse,**caractérisé en ce que** le dit ensemble comprend :
- au moins un mètre-ruban principal (1), ayant pour fonction le maintien de la membrane (2) en position enroulée avant le déploiement et le contrôle du déploiement, ledit mètre ruban principal associant un matériau composite et une couche d'un matériau présentant une variation de rigidité lors du franchissement d'un seuil de température,
- au moins un mètre-ruban secondaire en métal ou en matériau composite, ayant pour fonction la motorisation du déploiement de la membrane (2) du fait de leur tendance naturelle à se déplier.

2. Dispositif selon la revendication 1, **caractérisé en ce que** l'au moins un mètre-ruban principal (1) associe un matériau composite et une couche thermoplastique.

3. Dispositif selon l'une des revendications précédentes, **caractérisé en ce que** ledit ensemble et la membrane (2) sont co-enroulés autour d'un mandrin (11).

4. Dispositif selon l'une des revendications précédentes **caractérisé en ce que** lesdits éléments aptes à transformer l'énergie solaire en énergie électrique sont des cellules photovoltaïques souples.

5. Dispositif selon la revendication 4 **caractérisé en ce que** lesdites cellules photovoltaïques souples sont en AsGa.

6. Dispositif selon l'une des revendications précédentes, **caractérisé en ce que** ladite membrane (2) est souple.

7. Dispositif selon l'une des revendications précédentes, **caractérisé en ce que** ladite membrane (2) est composée d'éléments souples et rigides.

8. Dispositif selon la revendication 7, **caractérisé en ce que** lesdits éléments souples et rigides consistent en de fines lattes planes liées entre elles de manière flexible.

9. Dispositif selon l'une des revendications précédentes, **caractérisé en ce que** lesdits mètre-rubans (1) présentent une face bombée et **en ce qu'**ils sont enroulés indifféremment avec la face bombée vers l'extérieur ou la face bombée vers l'intérieur.

## Patentansprüche

1. Vorrichtung zum Entfalten eines Solargenerators, die Folgendes umfasst:
- eine Baugruppe, die mehrere Federbänder (1) umfasst, die eine aufwickelbare Membran (2) trägt, auf deren einen Seite mehrere Elemente vorgesehen sind, die Sonnenenergie in elektrische Energie umwandeln können, und
- wobei die Federbänder (1) und die Membran (2) im aufgewickelten Zustand gemeinsam mit einem einzigen Krümmungsradius gewickelt sind, der gleich dem Faltkrümmungsradius des Federbandes (1) ist,
- die Federbänder im Wesentlichen parallel und durch Querleisten (5) miteinander verbunden sind, die die Steifigkeit der Trägerstruktur gewährleisten, **dadurch gekennzeichnet, dass** die Baugruppe Folgendes umfasst:
- wenigstens ein HauptFederband (1) mit der Funktion des Haltens der Membran (2) in einer aufgewickelten Position vor dem Abwickeln und des Steuerns des Abwickelns, wobei das HauptFederband einen Verbundwerkstoff und eine Werkstoffschicht verbindet, deren Steifigkeit sich bei Überschreitung eines Temperaturschwellenwerts ändert,
- wenigstens ein sekundäres Federband aus Metall oder einem Verbundwerkstoff, dessen Funktion darin besteht, das Abwickeln der Membran (2) aufgrund seiner natürlichen Entfaltungstendenz zu bewirken.

2. Vorrichtung nach Anspruch 1, **dadurch gekennzeichnet, dass** das wenigstens eine HauptFederband (1) ein Verbundmaterial und eine thermoplastische Schicht verbindet.

3. Vorrichtung nach einem der vorherigen Ansprüche, **dadurch gekennzeichnet, dass** die Baugruppe und die Membran (2) zusammen um einen Dorn (11) gewickelt sind.

4. Vorrichtung nach einem der vorherigen Ansprüche, **dadurch gekennzeichnet, dass** die Elemente zum Umwandeln von Sonnenenergie in elektrische Energie flexible photovoltaische Zellen sind.

5. Vorrichtung nach Anspruch 4, **dadurch gekennzeichnet, dass** die flexiblen photovoltaischen Zellen aus AsGa sind.

6. Vorrichtung nach einem der vorherigen Ansprüche, **dadurch gekennzeichnet, dass** die Membran (2) flexibel ist.

7. Vorrichtung nach einem der vorherigen Ansprüche, **dadurch gekennzeichnet, dass** die Membran (2) aus flexiblen und starren Elementen zusammengesetzt ist.

8. Vorrichtung nach Anspruch 7, **dadurch gekennzeichnet, dass** die flexiblen und starren Elemente aus feinen ebenen Leisten bestehen, die auf flexible Weise miteinander verbunden sind.

9. Vorrichtung nach einem der vorherigen Ansprüche, **dadurch gekennzeichnet, dass** die Federbänder (1) eine erhabene Seite aufweisen, und dadurch, dass sie unterschiedslos mit der erhabenen Seite auf die Außenseite oder mit der erhabenen Seite auf die Innenseite gerollt werden.

## Claims

1. A solar generator deployment device comprising:
- an assembly comprising a plurality of tape-springs (1) supporting a windable membrane (2) on a face of which is arranged a plurality of elements capable of converting the solar energy into electrical energy, and
- in the wound state said tape-springs (1) and said membrane (2) being co-wound around a unique radius of curvature equal to the radius of curvature of folding of the tape-spring (1),
- said tape-springs being substantially parallel and interlinked by transversal slats (5) ensuring the rigidity of the bearing structure, **characterised in that** said assembly comprises:
- at least one main tape-spring (1), the function of which is to keep the membrane (2) in the wound position before deployment and to regulate the deployment, said main tape-spring combining a composite material and a layer of a material exhibiting a rigidity variation upon crossing a temperature threshold,
- at least one secondary tape-spring made of metal or of composite material, the function of which is to effectuate the deployment of the membrane (2) by virtue of their natural tendency to unfold.

2. The device according to Claim 1, **characterised in that** at least one main tape-spring (1) combines a composite material and a thermoplastic layer.

3. The device according to either of the preceding claims, **characterised in that** said assembly and the membrane (2) are co-wound around a mandrel (11).

4. The device according to any of the preceding claims, **characterised in that** said elements capable of transforming the solar energy into electrical energy are flexible photovoltaic cells.

5. The device according to Claim 4, **characterised in that** said flexible photovoltaic cells are made of GaAs.

6. The device according to any of the preceding claims, **characterised in that** said membrane (2) is flexible.

7. The device according to any of the preceding claims, **characterised in that** said membrane (2) is made up of flexible and rigid elements.

8. The device according to Claim 7, **characterised in that** said flexible and rigid elements consist of thin, flat slats interlinked flexibly.

9. The device according to any of the preceding claims, **characterised in that** said tape-springs (1) have a domed face and **in that** they are wound without preference with the domed face outward or the domed face inward.
